# EUROPÄISCHE PATENTSCHRIFT

(11) **EP 1 149 622 B1**
(45) Veröffentlichungstag und Bekanntmachung des Hinweises auf die Patenterteilung: **03.03.2004**
(21) Anmeldenummer: 01108592.5
(22) Anmeldetag: 05.04.2001
(51) Int. Cl.: B01D 53/32, B01D 53/92, B01D 53/94

(54) **Verfahren zur Entfernung von Stickoxiden aus einem Sauerstoff enthaltenden Rauchgasstrom**
Process for removal of nitrogen oxides from an oxygen ontaining flue gas stream
Procédé d'élimination des oxydes d'azote d'un courant de gaz de fumée contenant de l'oxygène

(30) Priorität: 29.04.2000 DE 10021071
(43) Veröffentlichungstag der Anmeldung: 31.10.2001
(73) Patentinhaber: Umicore AG & Co. KG, 63457 Hanau-Wolfgang (DE)
(72) Erfinder: Gieshoff, Jürgen, Dr., 63599 Biebergemünd (DE); Lang, Jürgen, Dr., 73230 Kirchheim-Teck (DE)
(74) Vertreter: Stellbrink, Axel

(56) Entgegenhaltungen:
- DE-A- 19 819 372
- US-A- 5 715 677
- US-A- 6 038 853

## Beschreibung

Die Erfindung betrifft ein Verfahren zur Entfernung von Stickoxiden aus Sauerstoff enthaltenden Rauchgasströmen industrieller Verbrennungsprozesse.

Stickoxide, die bei Verbrennungsprozessen entstehen, zählen zu den Hauptverursachern des sauren Regens und den damit verbundenen Umweltschäden. Quellen für die Stickoxidabgabe in die Umwelt sind hauptsächlich die Abgase von Kraftfahrzeugen sowie die Rauchgase von Verbrennungsanlagen, insbesondere von Kraftwerken mit Öl-, Gasoder Steinkohlefeuerungen oder von stationären Verbrennungsmotoren sowie von industriellen Betrieben. Die in den Abgasen enthaltenen Stickoxide bestehen je nach Führung des Verbrennungsprozesses zu 60 bis 90 Vol.-% aus Stickstoffmonoxid.

Ein Kennzeichen der Rauchgase aus diesen Prozessen ist ihr relativ hoher Sauerstoffgehalt, der die Reduktion der in ihnen enthaltenen Stickoxide erschwert. Zur Charakterisierung des Sauerstoffgehaltes wird häufig die Luftzahl Lambda (λ) herangezogen. Hierbei handelt es sich um das auf stöchiometrische Verhältnisse normierte Luft/Brennstoff-Verhältnis des Verbrennungsprozesses. Bei stöchiometrischer Verbrennung ist die Luftzahl gleich eins. Bei überstöchiometrischer Verbrennung wird die Luftzahl größer 1 - das resultierende Abgas ist mager. Im umgekehrten Fall spricht man von einem fetten Abgas.

Ein seit langem genutztes Verfahren zur Entfernung der Stickoxide aus solchen Rauchgasen ist die sogenannte selektive katalytischen Reduktion (SCR) mit Ammoniak an einem speziell ausgelegten Reduktionskatalysator. Geeignete Katalysatoren hierfür werden zum Beispiel in den Patentschriften EP 0367025 B1 und EP 0385164 B1 beschrieben. Sie bestehen zum Beispiel aus einer Mischung von Titanoxid mit Oxiden des Wolframs, Siliciums, Vanadiums und anderen. Ebenso sind Katalysatoren auf der Basis von mit Kupfer und Eisen ausgetauschten Zeolithen bekannt. Diese Katalysatoren entfalten ihre optimale Aktivität bei Temperaturen zwischen 300 und 500°C und einem Molverhältnis zwischen dem Reduktionsmittel Ammoniak und den Stickoxiden von 1,6 bis 0,6.

Wegen des häufig sehr hohen Schwefelgehaltes der zu reinigenden Rauchgase besteht die Gefahr der Vergiftung der Katalysatoren durch Schwefel. Daher ist der selektiven katalytischen Reduktion häufig eine Rauchgasentschwefelungsanlage vorgeschaltet, die allerdings bei Temperaturen unter 300°C betrieben wird, so dass das Rauchgas vor der selektiven katalytischen Reduktion wieder auf die Arbeitstemperatur der Entstickungskatalysatoren angehoben werden muß.

Aufgabe der vorliegenden Erfindung ist es, ein alternatives Verfahren für die Entfernung der Stickoxide aus Rauchgasen anzugeben, welches darüber hinaus die Gewinnung von Ammoniak als Wertstoff bei gleichzeitig verbessertem Wirkungsgrad ermöglicht.

Diese Aufgabe wird gelöst durch ein Verfahren, welches durch die folgenden Verfahrensschritte gekennzeichnet ist:
a) Behandeln des Rauchgases in einer elektrischen Gasentladung,
b) Leiten des so behandelten Rauchgases über ein basisches Speichermaterial zur Speicherung der Stickoxide in Form von Nitraten und Abgabe des gereinigten Rauchgases an die Umwelt und
c) Regenerieren des Speichermaterials nach Erschöpfung seiner Speicherkapazität durch Entfernen des Speichermaterials aus dem Rauchgasstrom und Behandeln mit einem reduzierend wirkenden regenerativen Gasstrom unter Bildung von Ammoniak.

Die vorliegende Erfindung geht von dem in der DE 198 19 372 A1 offenbarten Verfahren zur Verminderung des Stickoxidgehaltes der Abgase eines Verbrennungsmotors aus. Gemäß diesem Verfahren wird das magere Abgas eines überstöchiometrisch betriebenen Verbrennungsmotors durch ein elektrisches Gasentladungsplasma geführt. Das elektrische Gasentladungsplasma wird in einem sogenannten Plasmareaktor erzeugt. Im Gasentladungsplasma erfolgt eine Oxidation des Stickstoffmonoxids zu Stickstoffdioxid und, auf Grund des Wassergehaltes des Abgases, auch die Bildung von Salpetersäure. Stickstoffdioxid und Salpetersäure werden von einem basischen Speichermaterial in Form von Nitraten chemisch gebunden und damit aus dem Abgasstrom entfernt.

Nach Erschöpfung der Speicherkapazität des Speichermaterials werden gemäß der DE 198 19 372 A1 die gespeicherten Stickoxide durch Behandeln mit einem fetten Abgas zu Stickoxiden zersetzt und anschließend an einem Katalysator zu Stickstoff reduziert, wobei die im fetten Abgas enthaltenen Kohlenwasserstoffe als Reduktionsmittel für die Nitrate genutzt werden. Das auf diese Weise regenerierte Speichermaterial kann erneut zur Abspeicherung von Stickoxiden in Form von Nitraten verwendet werden.

Als basisches Speichermaterial sind zum Beispiel die Oxide der Alkali- und Erdalkalimetalle geeignet, aber auch die Seltenerdoxide können eingesetzt werden, insbesondere Ceroxid und Lanthanoxid. Diese Materialien könne direkt eingesetzt werden. Bevorzugt werden sie jedoch in hochdisperser Form auf hochoberflächigen Trägermaterialien, wie zum Beispiel aktivem Aluminiumoxid, aufgebracht, um eine möglichst große Wechselwirkungsfläche mit dem Abgas zur Verfügung zu stellen.

Es wurde nun gefunden, dass bei Regeneration des Speichermaterials mit einem sehr fetten Gasgemisch die freigesetzten Stickoxide bis zum Ammoniak reduziert werden. Hierzu sind Lambda-Werte des zur Regeneration eingesetzten Gasstromes von unter 0,8 erforderlich. Dagegen wird bei der üblichen Regeneration mit Lambda-Werten zwischen 0,9 und 1,0 nur eine Freisetzung der gespeicherten Nitrate in Form von Stickoxiden erreicht.

Das Speichermaterial zur Abspeicherung des im Plasmareaktor gebildeten Stickstoffdioxids, beziehungsweise der Salpetersäure, kann im Plasmareaktor selbst oder in einem in Strömungsrichtung des Rauchgases hinter dem Plasmareaktor liegenden Absorptionsgefäß angeordnet sein. Ist das Speichermaterial in der Gasentladung angeordnet, so laufen die Verfahrensschritte a) und b) parallel zueinander ab. Gasentladung und Speichennaterial können auch in einem einzigen Reaktor in Strömungsrichtung des Rauchgases hintereinander angeordnet sein.

Das Speichermaterial wird erfindungsgemäß kontinuierlich aus dem Rauchgasstrom entfernt und einer separaten Station zur Regeneration seiner Speicherkapazität zugeführt. In dieser separaten Station wird das Speichermaterial durch Behandeln mit einem fetten Gasstrom regeneriert. Die Regeneration wird dabei so geführt, dass die abgespeicherten Nitrate in Form von Ammoniak freigesetzt werden. Der fette Gasstrom muß zu diesem Zweck eine Luftzahl von unter 0,8 aufweisen. Er kann in einfacher Weise durch eine unterstöchiometrisch betriebene Verbrennung erzeugt werden.

Das regenerierte Speichermaterial wird wieder dem Plasmareaktor oder dem Absorptionsgefäß zugeführt, während der freigesetzte Ammoniak durch Kondensation von dem zur Regeneration verwendeten Gasstrom abgetrennt und als Wertstoff gewonnen wird.

In einer bevorzugten Ausführungsform des Verfahrens wird das Rauchgas vor dem Eintritt in die elektrische Gasentladung in einer Rauchgasentschwefelungsanlage von Schwefelverbindungen befreit. Da das Verfahren das Rauchgas ohne die Verwendung einer Verfahrensstufe zur selektiven katalytischen Reduktion von den Stickoxiden befreit, ist es auch nicht erforderlich, nach Durchlaufen der Rauchgasentschwefelungsanlage, die Temperatur des Rauchgases wieder auf die Arbeitstemperatur der selektiven katalytischen Reduktion anzuheben. Die Bildung von Stickstoffdioxid und Salpetersäure in der Gasentladung sowie die Abspeicherung in Form von Nitraten auf dem Speichermaterial erfolgt auch bei den Austrittstemperaturen der Rauchgasentschwefelungsanlage. Durch die fehlende Notwendigkeit, das Rauchgas erneut aufzuheizen, wird zum Beispiel der Wirkungsgrad eines Kraftwerks verbessert.

In einer weiteren Ausführungsform des Verfahrens wird es mit dem konventionellen SCR-Verfahren kombiniert. Der mit dem Verfahren gewonnene Ammoniak wird dabei zur selektiven katalytischen Reduktion der in einem weiteren Rauchgasstrom enthaltenen Stickoxide eingesetzt. In dieser Ausführungsform des Verfahrens wird also der Rauchgasstrom des Kraftwerkes in wenigstens zwei Teilströme aufgeteilt. Ein Teilstrom wird wie durch die Verfahrensschritte a) bis c) vorgegeben gereinigt, während der zweite über einen Katalysator zur selektiven katalytischen Reduktion geleitet wird. Als Reduktionsmittel wird dabei zumindest teilweise der in Schritt c) freigesetzte Ammoniak verwendet.

Die Erfindung wird nun an Hand der Figuren 1 bis 4 näher erläutert. Es zeigen:
- **Figur 1:**: Plasmareaktor mit beidseitig behinderter dielektrischer Barrierenentladung zwischen parallelen, flächigen Elektroden und einer Füllung aus pelletiertem Speichermaterial.
- **Figur 2:**: Schema des erfindungsgemäßen Verfahrens mit Kreisführung des Regenerativgasstromes
- **Figur 3:**: Schema des erfindungsgemäßen Verfahrens mit Abgabe des Regenerativgasstromes an die Umwelt, nachdem der Regenerativgasstrom einer Nachverbrennung unterzogen wurde
- **Figur 4:**: Schema des erfindungsgemäßen Verfahrens mit Verwendung des gewonnenen Ammoniaks als Reduktionsmittel für die selektive katalytische Reduktion eines weiteren Rauchgasstromes

Es können unterschiedliche Gasentladungen zur Behandlung der Abgase eingesetzt werden. Geeignet sind Hochfrequenzentladungen , auch mit Frequenzen oberhalb 250 MHz (Mikrowellenentladungen), Corona-Entladungen und die dielektrisch behinderte Entladung, auch Barrieren-Entladung genannt. Ebenso geeignet sind Mischformen dieser elektrischen Gasentladungen. Bevorzugt werden für das vorgeschlagene Verfahren Barrieren-Entladungen eingesetzt.

Eine Barrieren-Entladung kann zwischen zwei metallischen Elektroden erzeugt werden, von denen wenigsten eine mit einem Dielektrikum belegt ist, welches eine Funken- oder Bogenbildung zwischen den beiden metallischen Elektroden verhindert. Stattdessen bildet sich eine Vielzahl von kurzzeitigen und räumlich eng begrenzten Mikroentladungen aus, deren Entladungsdauer, und Energiemenge durch das Dielektrikum begrenzt wird. Geeignete Dielektrika sind Keramiken, Glas, Porzellan oder isolierende Kunststoffe wie zum Beispiel Teflon. Weitere geeignete Materialien sind in der VDE 0303 und DIN 40685 beschrieben.

Barrieren-Entladungen können bei Drücken zwischen 0,1 und 10 bar betrieben werden. Die elektrische Anregung der Entladung erfolgt durch Anlegen einer Wechselspannung an die Elektroden. Je nach Druck im Entladungsraum, Abstand der Elektroden, Frequenz und Amplitude der Wechselspannung bilden sich beim Überschreiten einer Zündspannung dünne, räumlich und zeitlich statistisch verteilte Entladungskanäle von nur wenigen Nanosekunden Dauer aus.

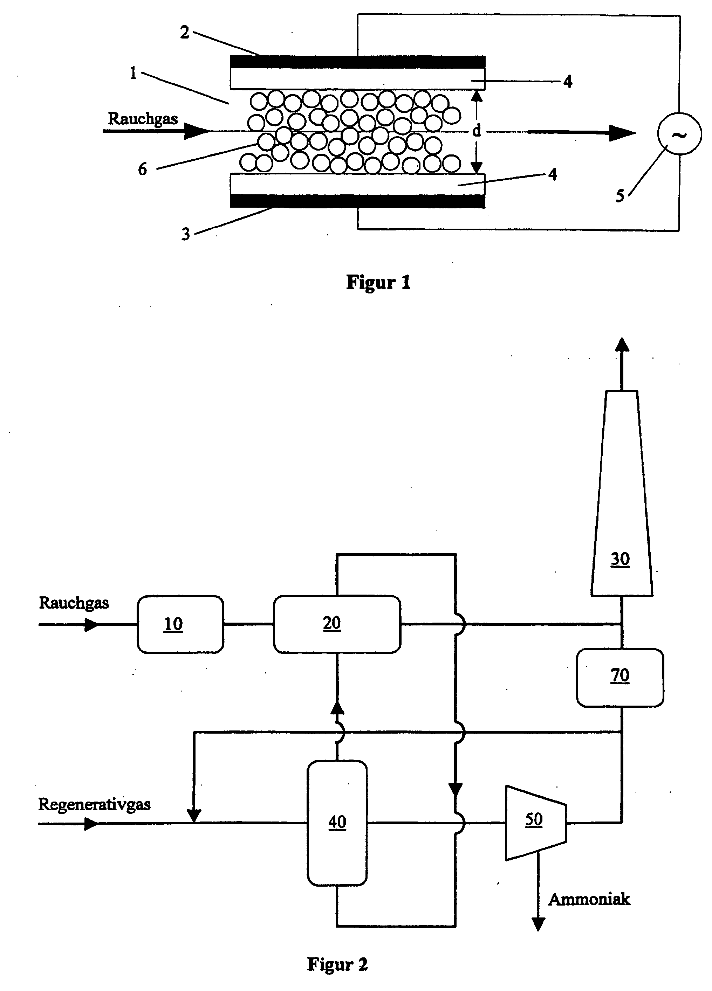

Figur 1 zeigt den prinzipiellen Aufbau eines Plasmareaktors, in dem eine dielektrische Barrieren-Entladung gezündet werden kann. (2) und (3) bezeichnen zwei metallische Elektroden, die sich gegenüberstehen und mit einer Wechselspannungsquelle (5) verbunden sind. Zur Unterbindung der Ausbildung eines Entladungsbogens zwischen den beiden Elektroden sind beide Elektroden mit einem Dielektrikum (4) belegt. Eine solche Entladung wird als beidseitig dielektrisch behindert bezeichnet. Es besteht jedoch auch die Möglichkeit, nur eine der Elektroden mit einem Dielektrikum zu belegen. In diesem Fall bildet sich eine einseitig dielektrisch behinderte Gasentladung aus.

Durch Anlegen einer Wechselspannung an die beiden Elektroden kommt es bei ausreichender Spannung zu der gewünschten Entladung. Die benötigte Spannung hängt von dem freien Abstand d zwischen Dielektrikum und Gegenelektrode, vom verwendeten Dielektrikum sowie vom Druck in der Entladungsstrecke, von der Gaszusammensetzung und von eventuell vorhandenen Einbauten zwischen den Dielektrika im Entladungsraum ab. Der Abstand d wird bevorzugt zwischen 0,1 und 10 mm eingestellt. Die benötigten Spannungen können 15 kV und mehr betragen. Die Frequenz der Wechselspannung liegt bevorzugt zwischen 50 Hz und 250 MHz.

Der Plasmareaktor von Figur 1 ist zur Durchführung des Verfahrens gemäß Patentanspruch 2 mit Pellets gefüllt, welche aus einem Speichermaterial für die Stickoxide bestehen. Diese Anordnung ist für die Durchführung des Verfahrens besonders geeignet. Die sich in dem mit den Pellets gefüllten Reaktor ausbildende elektrische Entladung findet vor allen Dingen in Form von Gleitentladungen an der Oberfläche der Pellets statt. Dadurch wird die Konzentration an Ionen und Radikalen in räumlicher Nachbarschaft der Oberfläche erhöht, was zu einer verbesserten Abspeicherung der Stickoxide in Form von Nitraten führt.

Die Pellets bestehen bevorzugt aus mindestens einem feinteiligen Trägermaterial ausgewählt aus der Gruppe Aluminiumoxid, Titanoxid, Zirkonoxid, Ceroxid, Siliciumdioxid, Magnesiumoxid oder deren Mischoxide und Zeolithen. Die Trägermaterialien sind in bekannter Weise mit den Speicherkomponenten belegt. Außerdem können sie durch Abscheiden der Edelmetalle der Platingruppe, insbesondere Platin, Palladium, Rhodium und Iridium, in hochdisperser Form auf ihrer Oberfläche katalytisch aktiviert werden. Zu diesem Zweck sollte die spezifische Oberfläche der Trägermaterialien wenigstens 10 m²/g (gemessen nach DIN 66132) betragen. Wegen der geringen Temperaturbelastung können auch Materialien mit geringerer Temperaturbeständigkeit eingesetzt werden.

Zusätzlich zu den Pellets oder alternativ dazu kann das Dielektrikum auf den Elektrodenoberflächen mit einer katalytisch aktiven Schicht versehen sein. Ihre Zusammensetzung kann der soeben beschriebenen Zusammensetzung für die Speicher-Pellets entsprechen. In bestimmten Anwendungsfällen kann das Dielektrikum auf den Elektrodenoberflächen selbst als katalytisch aktive Schicht ausgebildet sein. Voraussetzung hierfür ist, dass die Isolationswirkung der Schicht den Anforderungen einer dielektrisch behinderten Entladung genügt.

Die Elektroden des Plasmareaktors können als parallel zueinander ausgerichtete flächige Gebilde aufgebaut sein oder eine koaxiale Anordnung mit einer Mittenelektrode, die von einer Rohrelektrode umgeben ist, bilden. Zur Erleichterung der Ausbildung von Entladungsfäden können räumliche Inhomogenitäten vorgesehen sein, die zu lokalen Feldüberhöhungen und damit zur Ausbildung der Entladung führen. Wie aus der Literatur bekannt ist, ist die eingekoppelte Elektronenenergie bei einer Plasmaentladung abhängig vom Produkt aus Elektrodenabstand d und Druck p (d*p), so dass bei konstantem Gasdruck allein über die Änderung der Geometrie des Reaktors, bestimmte Radikalreaktionen im Plasma gefördert beziehungsweise unterdrückt werden können. Für das vorgeschlagene Verfahren sollte das Produkt aus Elektrodenabstand und Druck im Bereich zwischen 0,1 und 100 mm*bar liegen.

Die Entladung kann über verschiedenartige Wechselspannungen angeregt werden. Für eine hohe Elektronendichte und möglichst gleichzeitige Ausbildung der Entladung im gesamten Entladungsraum des Reaktors sind pulsförmige Anregungsspannungen besonders geeignet. Diese Wechselspannungen können auch bis zu niedrigen Frequenzen hin (10 bis 0,01 Hz) moduliert werden, um beispielsweise die Reaktion von adsorbierten Spezies zu ermöglichen.

Der Reaktor kann aus jedem elektrisch und thermisch geeigneten Material hergestellt werden. Insbesondere sind Kunststoffe, Keramiken und Gläser zu nennen. Ebenso sind hybride Konstruktionen aus verschiedenen Materialien möglich.

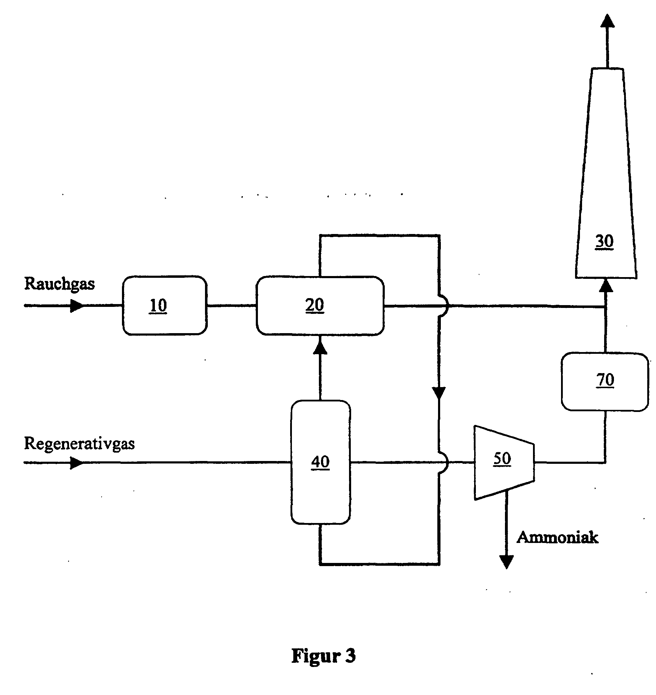

Die Figuren 2 und 3 zeigen ein Verfahrensschema für die Reinigung des Rauchgases eines Kraftwerkes. Das Rauchgas wird nach der Entschwefelung in der Entschwefelungsanlage (10) durch den Plasmareaktor 20 geführt, der mit pelletiertem Speichermaterial gefüllt ist. Infolge des in der Gasentladung angeordnetem Speichermaterials werden die Stickoxide absorptiv aus dem Rauchgasstrom entfernt, der anschließend über den Schornstein (30) an die Umgebung abgegeben werden kann. Auf Grund der Beladung mit den Stickoxiden verringert sich die Speicherkapazität des Speichermaterials kontinuierlich. Zur Regeneration wird das Speichermaterial daher ebenfalls kontinuierlich aus dem Plasmareaktor ausgeschleust und in dem Regenerationsreaktor (40) durch Überleiten von reduzierend wirkendem Regenerativgas unter Bildung von Ammoniak regeneriert. Das regenerierte Speichermaterial wird in den Plasmareaktor zur erneuten Beladung mit Stickoxiden zurückgeführt. Der Ammoniak wird in der Trenneinheit (50) zum Beispiel durch Auskondensation aus dem Regenerativgasstrom entfernt und als Wertstoff weiterverarbeitet. Der vom Ammoniak befreite Regenerativgasstrom kann nach Behandeln in einer Nachverbrennungseinheit (70) ebenfalls über den Schornstein (30) an die Umwelt abgegeben werden (siehe Figur 3). Bevorzugt wird jedoch ein Teil des Regenerativgasstromes im Kreislauf geführt (siehe Figur 2).

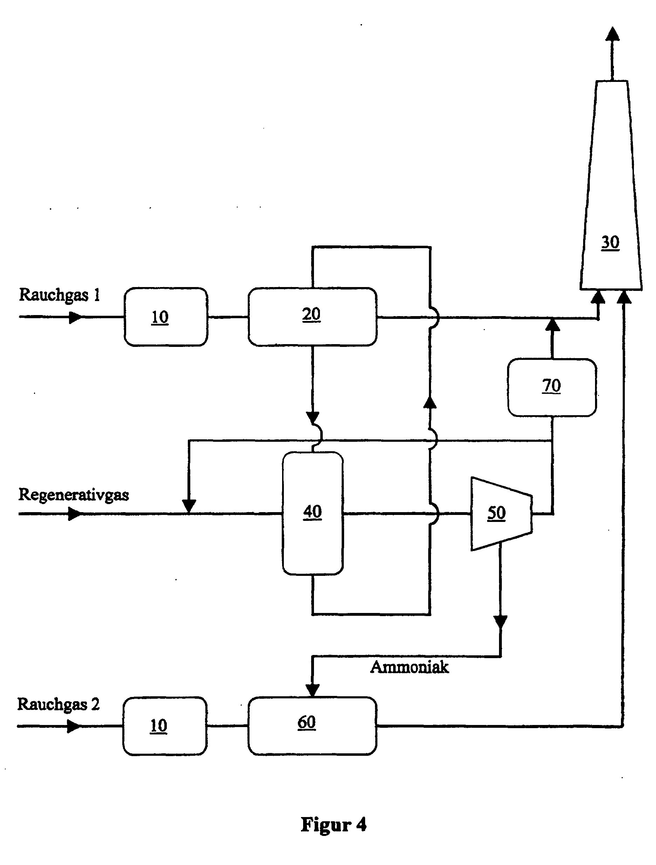

Figur 4 zeigt ein mögliches Verfahrensschema für das Verfahren gemäß Patentanspruch 7. Es ist gegenüber dem Verfahrensschema von Figur 3 durch einen zweiten Rauchgasstrom erweitert. Der zweite Rauchgasstrom wird ebenfalls in einer Entschwefelungsanlage (10) entschwefelt. Danach werden die in ihm enthaltenen Stickoxide in einem Reaktor (60) zur selektiven katalytischen Reduktion an einem entsprechenden Katalysator zu Stickstoff reduziert, bevor das gereinigte Rauchgas über den Schornstein an die Umwelt abgegeben. Als Reduktionsmittel für die selektive katalytische Reduktion wird der bei der Regeneration des Speichermaterials gewonnene Ammoniak verwendet.

## Patentansprüche

1. Verfahren zur Entfernung von Stickoxiden aus einem Sauerstoff enthaltenden Rauchgasstrom **gekennzeichnet durch** die Verfahrensschritte:
a) Behandeln des Rauchgases in einer elektrischen Gasentladung,
b) Leiten des so behandelten Rauchgases über ein basisches Speichermaterial zur Speicherung der Stickoxide in Form von Nitraten und Abgabe des gereinigten Rauchgases an die Umwelt und
c) Regenerieren des Speichermaterials nach Erschöpfung seiner Speicherkapazität **durch** Entfernen des Speichermaterials aus dem Rauchgasstrom und Behandeln mit einem reduzierend wirkenden regenerativen Gasstrom unter Bildung von Ammoniak.

2. Verfahren nach Anspruch 1,
**dadurch gekennzeichnet,**
**dass** die Verfahrensschritte a) und b) durch Anordnen des Speichermaterials in der Gasentladung parallel ablaufen.

3. Verfahren nach Anspruch 1,
**dadurch gekennzeichnet,**
**dass** Gasentladung und Speichermaterial in einem einzigen Reaktor hintereinander angeordnet sind.

4. Verfahren nach einem der vorstehenden Ansprüche,
**dadurch gekennzeichnet,**
**dass** das Rauchgas vor dem Eintritt in die elektrische Gasentladung von Schwefelverbindungen befreit wird.

5. Verfahren nach Anspruch 4,
**dadurch gekennzeichnet,**
**dass** das regenerierte Speichermaterial wieder in das Verfahren zurückgeführt wird.

6. Verfahren nach Anspruch 5,
**dadurch gekennzeichnet,**
**dass** der in Verfahrensschritt c) erzeugte Ammoniak auskondensiert und als Wertstoff gewonnen wird.

7. Verfahren nach Anspruch 6,
**dadurch gekennzeichnet,**
**dass** der in Verfahrensschritt c) erzeugte Ammoniak zur selektiven, katalytischen Reduktion eines weiteren Rauchgasstromes verwendet wird.

8. Verfahren nach Anspruch 1,
**dadurch gekennzeichnet,**
**dass** der regenerative Gasstrom Kohlenmonoxid und Wasserdampf enthält und mittels eines unterstöchiometrisch betriebenen Verbrennungsprozesses gewonnen wird.

9. Verfahren nach Anspruch 1,
**dadurch gekennzeichnet,**
**dass** der regenerative Gasstrom im Kreislauf geführt wird.

10. Verfahren nach Anspruch 1,
**dadurch gekennzeichnet,**
**dass** der regenerative Gasstrom vor der Abgabe an die Umwelt einer Nachverbrennung unterworfen wird.

11. Verfahren nach Anspruch 1,
**dadurch gekennzeichnet,**
**dass** die Gasentladung gepulst oder moduliert betrieben wird.

12. Verfahren nach Anspruch 1,
**dadurch gekennzeichnet,**
**dass** das Produkt aus dem Elektrodenabstand und dem Gasdruck zwischen 0,1 und 100 mm*bar beträgt.

13. Verfahren nach Anspruch 1,
**dadurch gekennzeichnet,**
**dass** die Gasentladung bevorzugt als Oberflächengleitentladung ausgeführt ist.

## Claims

1. A process for removing nitrogen oxides from an oxygen-containing stream of flue gas, **characterised by** the process steps:
a) treatment of the flue gas in an electric gas discharge,
b) passage of the flue gas treated in this way over a basic storage material for storing nitrogen oxides in the form of nitrates and discharge of the purified flue gas to the environment and
c) regeneration of the storage material after exhaustion of its storage capacity by removing the storage material from the stream of flue gas and treating with a reducing regenerative stream of gas with the formation of ammonia.

2. A process according to Claim 1,
**characterised in that**
process steps a) and b) proceed in parallel by arranging the storage material in the gas discharge.

3. A process according to Claim 1,
**characterised in that**
the gas discharge and the storage material are arranged in sequence in a single reactor.

4. A process according to one of the preceding claims,
**characterised in that**
sulfur compounds are removed from the flue gas before entrance to the electric gas discharge.

5. A process according to Claim 4,
**characterised in that**
the regenerated storage material is recycled to the process.

6. A process according to Claim 5,
**characterised in that**
the ammonia produced in process step c) condenses out and is recovered as a useful material.

7. A process according to Claim 6,
**characterised in that**
the ammonia produced in process step c) is used for the selective catalytic reduction of another stream of flue gas.

8. A process according to Claim 1,
**characterised in that**
the regenerative gas stream contains carbon monoxide and water vapour and is obtained by means of a combustion process operating under substoichiometric conditions.

9. A process according to Claim 1,
**characterised in that**
the regenerative gas stream is recirculated.

10. A process according to Claim 1,
**characterised in that**
the regenerative gas stream is subjected to post-combustion before discharge to the environment.

11. A process according to Claim 1,
**characterised in that**
the gas discharge is operated in a pulsed or modulated manner.

12. A process according to Claim 1,
**characterised in that**
the product of the electrode spacing and the gas pressure is between 0.1 and 100 mm*bar.

13. A process according to Claim 1,
**characterised in that**
the gas discharge is preferably specified as a surface creeping discharge.

## Revendications

1. Procédé pour éliminer les oxydes d'azote d'un flux de gaz de fumée contenant de l'oxygène, **caractérisé par** les étapes de procédé :
a) traitement des gaz de fumée dans une décharge électrique de gaz,
b) passage des gaz de fumée ainsi traités sur un matériau d'accumulation basique pour l'accumulation des oxydes d'azote sous forme de nitrates et émission des gaz de fumée purifiés dans l'environnement et
c) régénération du matériau d'accumulation lorsqu'il a atteint sa capacité d'accumulation par élimination du matériau d'accumulation du flux de gaz de fumée et traitement par un flux gazeux de régénération agissant par réduction avec formation d'ammoniac.

2. Procédé selon la revendication 1, **caractérisé en ce que** les étapes de procédé a) et b) se déroulent en parallèle par disposition du matériau d'accumulation dans la décharge du gaz.

3. Procédé selon la revendication 1, **caractérisé en ce que** la décharge du gaz et le matériau d'accumulation sont disposés dans un seul réacteur, l'un derrière l'autre.

4. Procédé selon l'une quelconque des revendications précédentes, **caractérisé en ce que** le gaz de fumée est libéré des composés soufrés avant l'entrée dans la décharge électrique du gaz.

5. Procédé selon la revendication 4, **caractérisé en ce que** le matériau d'accumulation régénéré est à nouveau introduit dans le procédé.

6. Procédé selon la revendication 5, **caractérisé en ce que** l'ammoniac produit dans l'étape de procédé c) est séparé par condensation et obtenu comme produit de valorisation.

7. Procédé selon la revendication 6, **caractérisé en ce que** l'ammoniac produit dans l'étape de procédé c) est utilisé pour la réduction sélective catalytique d'un autre flux de gaz de fumée.

8. Procédé selon la revendication 1, **caractérisé en ce que** le flux de gaz de régénération contient du monoxyde de carbone et de la vapeur d'eau et est obtenu au moyen d'un procédé de calcination opéré de manière non stoechiométrique.

9. Procédé selon la revendication 1, **caractérisé en ce que** le flux gazeux de régénération est guidé en circulation.

10. Procédé selon la revendication 1, **caractérisé en ce que** le flux gazeux de régénération est soumis à une post-combustion avant son évacuation dans l'environnement.

11. Procédé selon la revendication 1, **caractérisé en ce que** la décharge du gaz est opérée par impulsions ou de manière modulée.

12. Procédé selon la revendication 1, **caractérisé en ce que** le produit de l'écart des électrodes et de la pression gazeuse est compris entre 0,1 et 100 mm*bar.

13. Procédé selon la revendication 1, **caractérisé en ce que** la décharge du gaz est de préférence réalisée en tant que décharge superficielle.
